# EUROPÄISCHE PATENTSCHRIFT

(11) **EP 3 115 274 B1**
(45) Veröffentlichungstag und Bekanntmachung des Hinweises auf die Patenterteilung: **07.03.2018**
(21) Anmeldenummer: 16175870.1
(22) Anmeldetag: 23.06.2016
(51) Int. Cl.: B62B 3/18

(54) **ROLLWAGEN ZUM TRANSPORT VON STÜCKGÜTERN**
ROLLER CART FOR TRANSPORTING PIECE GOODS
CHARIOT ROULANT DESTINÉ AU TRANSPORT DE MARCHANDISES AU DÉTAIL

(30) Priorität: 01.07.2015 DE 102015110608
(43) Veröffentlichungstag der Anmeldung: 11.01.2017
(73) Patentinhaber: LKE Gesellschaft für Logistik- und Kommunikations- Equipment mbH, 45768 Marl (DE)
(72) Erfinder: Eidams, Werner, 46282 Dorsten (DE); Eilders, Joachim, 45529 Hattingen (DE)
(74) Vertreter: Rausch Wanischeck-Bergmann Brinkmann

(56) Entgegenhaltungen:
- WO-A1-91/12999
- US-A- 3 840 243
- US-A- 3 971 568

## Beschreibung

Die Erfindung betrifft einen Rollwagen zum Transport von Stückgütern, insbesondere von Paketen oder Briefbehältern, mit wenigstens drei Rollen, einer Längsseite, Seitenwänden, einem die Seitenwände miteinander verbindenden Längsseitenteil und mindestens einem hochklappbaren Boden, wobei eine der Seitenwände um eine vertikale Achse klappbar ist.
Rollwagen zum Transport von Stückgütern, auch Transportwagen oder Rollcontainer genannt, sind in vielfältigen Ausführungen bekannt. Um den Platzbedarf für unbeladene Rollwagen zu verringern, ist es bekannt, diese nestbar bzw. ineinander schiebbar auszuführen. Dadurch lässt sich die benötigte Grundfläche der Rollwagen verkleinern.
Ein Prinzip, um Hand geführte Rollwagen im Leerzustand ineinander schieben zu können, ist von Einkaufswagen in Supermärkten bekannt (siehe z.B. DE 40 30 330 A1).
Des Weiteren sind Rollwagen bekannt, die einen schwenkbaren Grundboden sowie eine schwenkbare Seitenwand aufweisen. Der schwenkbare Grundboden solcher Rollwagen kann zu einer der feststehenden Wände hochgeklappt und die schwenkbare Seitenwand kann anschließend z.B. an die feststehende Rückwand geklappt werden. Die rechteckige Grundfläche des Rollwagens lässt sich auf diese Weise im Leerzustand des Wagens auf eine L-förmige Grundfläche verkleinern, und mehrere solcher eingeklappter Rollwagen können dann platzsparend ineinander geschoben werden (vgl. z.B. JP 2005-132163A). Dokument US3840243 offenbart einen Rollwagen mit allen Merkmalen des Oberbegriffs des Anspruchs 1. Der Erfindung liegt die Aufgabe zugrunde, Rollwagen der eingangs genannten Art zu schaffen, die sich im eingeklappten Leerzustand besonders platzsparend ineinanderschieben lassen, um beim Lagern oder Rücktransport der leeren Rollwagen Lager- bzw. Transportvolumen zu sparen.

Diese Aufgabe wird durch einen Rollwagen mit den in Anspruch 1 angegebenen Merkmalen gelöst. Bevorzugte und vorteilhafte Ausgestaltungen des erfindungsgemäßen Rollwagens sind in den Unteransprüchen angegeben.

Der erfindungsgemäße Rollwagen (Transportwagen) ist dadurch gekennzeichnet, dass die klappbare Seitenwand auf einem Träger steht, der mit mindestens einer der Rollen versehen ist, einen Abschnitt der Längsseite des Rollwagens definiert und über ein Gelenk mit dem Längsseitenteil verbunden ist, wobei die Drehachse des Gelenks von der Außenseite der klappbaren Seitenwand um ein horizontales Maß beabstandet ist, welches in einem Größenbereich liegt, dessen Untergrenze dem Durchmesser der mindestens einen an dem Träger vorgesehenen Rolle entspricht und dessen Obergrenze 52%, vorzugsweise ca. 50% der Breite der klappbaren Seitenwand entspricht, und wobei das Gelenk die vertikale Achse definiert, um welche die Seitenwand klappbar ist.

Durch die Erfindung wird erreicht, dass ein Rollwagen der eingangs genannten Art im eingeklappten Zustand nicht nur eine reduzierte Grundfläche in L-Form einnimmt, sondern dass dann zudem seine Gesamtlänge reduziert ist. Somit ist es möglich, zwei dieser Rollwagen im eingeklappten Leerzustand so ineinander zu stellen, dass sie nur etwa die Grundfläche eines einzelnen Rollwagens im ausgeklappten Betriebszustand einnehmen und ineinander gestellt die Gesamtlänge des einzelnen Rollwagens nicht überschreiten. Zwei erfindungsgemäße, einander entsprechende Rollwagen lassen sich somit im eingeklappten Leerzustand besonders platzsparend ineinanderschieben, um beim Lagern oder Rücktransport der leeren Rollwagen Lager- bzw. Transportvolumen zu sparen.

Die Gesamtlänge des erfindungsgemäßen Rollwagens liegt vorzugsweise im Bereich von ca. 1200 mm bis ca. 1210 mm. Seine Breite liegt vorzugsweise im Bereich von ca. 560 mm bis ca. 600 mm.

Die Ladeflächen herkömmlicher, moderner Lastkraftwagen weisen üblicherweise eine Breite von ca. 2450 mm auf. Viele Ladungsträger, unter anderem Standard-Europaletten, weisen deshalb ein Größtmaß von ca. 1200 mm auf, so dass die vorhandene Laderaumbreite durch zwei nebeneinander angeordnete Ladungsträger optimal genutzt werden kann. Dies ist mit Rollwagen gemäß der Erfindung auch möglich. Im eingeklappten Leerzustand können gegebenenfalls vier Rollwagen, wobei je zwei Rollwagen paarweise ineinander gestellt sind und die horizontalen Längsmittelachsen der Rollwagen miteinander fluchten, auf der Breite der Ladefläche aufgestellt werden.

Eine bevorzugte Ausgestaltung des erfindungsgemäßen Rollwagens ist dadurch gekennzeichnet, dass die Drehachse des in der Längsseite angeordneten Gelenks von der Außenseite der klappbaren Seitenwand um ein horizontales Maß beabstandet ist, welches in einem Größenbereich liegt, dessen Untergrenze einem Drittel der Breite der klappbaren Seitenwand (und dessen Obergrenze 52%, vorzugsweise ca. 50% der Breite der klappbaren Seitenwand) entspricht. In diesem Fall ergibt sich bei einer Seitenwandbreite im Bereich von zum Beispiel ca. 560 mm bis ca. 600 mm eine relativ große Reduzierung der Gesamtlänge des Rollwagens beim Einklappen der Seitenwand.

Eine weitere vorteilhafte Ausgestaltung der Erfindung sieht vor, dass der Träger, auf dem die klappbare Seitenwand steht und der über ein Gelenk mit dem Längsseitenteil verbunden ist, rahmenförmig ausgebildet ist. Hierdurch lässt sich bei geringem Gewicht des Rollwagens eine zureichend hohe Stabilität des Rollwagens insbesondere beim Einklappen der Seitenwand sicherstellen. Günstig ist die rahmenförmige Ausgestaltung des Trägers auch hinsichtlich der Stabilität des die Rollen umfassenden Fahrwerks und auch hinsichtlich der Stabilität und Tragfähigkeit des hochklappbaren Bodens (Grundbodens).

Die mindestens eine Rolle, die an dem die klappbare Seitenwand tragenden Träger vorgesehen ist, ist vorzugsweise als Lenkrolle ausgeführt, um das Einklappen der Seitenwand zu erleichtern. Insbesondere wird dadurch sichergestellt, dass der Rollwagen auch im eingeklappten Leerzustand problemlos verfahren werden kann.

Nach einer weiteren vorteilhaften Ausgestaltung des erfindungsgemäßen Rollwagens ist an der Unterseite des Bodens (Grundbodens) mindestens ein Verbindungselement vorgesehen, dem ein am Träger vorgesehenes Verbindungselement zugeordnet ist, wobei beide Verbindungselemente miteinander gekoppelt eine Formschluss- und/oder Rastverbindung definieren. Hierdurch wird die klappbare Seitenwand in ihrer im Wesentlichen rechtwinkligen Stellung relativ zu dem Längsseitenteil, also im Gebrauchszustand des Rollwagens, sehr zuverlässig gegen ungewolltes Ausklappen gesichert.

Die Rollen des erfindungsgemäßen Rollwagens sind vorzugsweise so angeordnet, dass sie beim Verfahren des Rollwagens in einer Fahrrichtung, die parallel zu seiner Längsseite ist, gegenüber den Außenseiten der Seitenwände nicht vorstehen. Diese Ausgestaltung ist vorteilhaft für die Verringerung des Platzbedarfs des Rollwagens im eingeklappten Leerzustand, da die Rollen so vollständig unterhalb des Bodens angeordnet sind oder jedenfalls vollständig unter den Boden geschwenkt werden können.

Das Längsseitenteil des erfindungsgemäßen Rollwagens ist vorzugsweise ohne starre Rückwand, sondern lediglich als Längsholm ausgebildet. Allerdings kann der Rollwagen gegebenenfalls auch ein flexibles Netz, z.B. ein Netz aus gummielastischem Material aufweisen, das ähnlich einer Rückwand die Seitenwände miteinander verbindet.

Eine weitere vorteilhafte Ausgestaltung des erfindungsgemäßen Rollwagens sieht vor, dass sein Boden (Grundboden) mit einem schlaufen- oder bügelförmigen Griff versehen ist, der gegenüber der Unterseite des Bodens vorsteht und entlang der dem Längsseitenteil abgewandten Längskante des Bodens verläuft. Der Griff erleichtert die Handhabung des Bodens beim Hoch- und Herunterklappen desselben. Insbesondere verbessert der Griff die Handhabbarkeit des Rollwagens im eingeklappten Leerzustand. Zudem kann der Griff die Biegesteifigkeit des Bodens erhöhen. Darüber hinaus kann der Griff als Unterfahrschutz wirken, der verhindert, dass lose, auf dem Fahrgrund des Rollwagens liegende Objekte unter den Rollwagen gelangen.

Auch ist es vorteilhaft, wenn gemäß einer weiteren Ausgestaltung des Rollwagens das Längsseitenteil mit einem schlaufen- oder bügelförmigen Ansatzelement versehen ist, das gegenüber der Unterseite des Längsseitenteils vorsteht. Das schlaufen- oder bügelförmige Ansatzelement kann die Biegesteifigkeit des Längsseitenteils erhöhen und/oder ebenfalls als Unterfahrschutz in dem voranstehend in Bezug auf den Griff des klappbaren Bodens genannten Sinne fungieren. Insbesondere können das bügelförmige Ansatzelement sowie der bügelförmige Griff (auch) als Führung zur Aufnahme einer Hubvorrichtung, z.B. einer Gabel eines Gabelstaplers dienen.

In konstruktiver Hinsicht lässt sich der erfindungsgemäße Rollwagen relativ einfach realisieren, wenn sein Boden gemäß einer weiteren bevorzugten Ausgestaltung um eine horizontale Achse klappbar ist, die parallel zu einer der Seitenwände verläuft. Des Weiteren ist es hinsichtlich einer leichten Handhabung der klappbaren Seitenwand sowie aus Stabilitätsgründen günstig, wenn die Seitenwand, an welcher der Boden hochklappbar ist, als feststehende Seitenwand ausgebildet ist. Auch ist es zur Erzielung einer zureichenden Stabilität des Rollwagens bei geringem Gewicht vorteilhaft, wenn die feststehende Seitenwand gemäß einer bevorzugten Ausgestaltung des Rollwagens auf einem rahmenförmig ausgebildeten Träger steht, der mit mindestens zwei der Rollen versehen ist.

Die an dem Träger der feststehenden Seitenwand angeordneten Rollen sind beispielsweise als Bockrollen ausgeführt. Um die Verfahrbarkeit des erfindungsgemäßen zu verbessern, können die an der feststehenden Seitenwand angeordneten Rollen aber auch nach einer weiteren Ausgestaltung als Lenkrollen mit Richtungsfeststeller ausgeführt sein. Die Richtungsfeststeller können bei Bedarf entriegelt werden.

Um das Gewicht des Rollwagens zu reduzieren, sind seine Seitenwände vorzugsweise als Gitterwände ausgebildet. Sie sind beispielsweise aus dünnen Metallrahmen und dünnen Metallstangen, vorzugsweise aus Leichtmetall, gefertigt. In diesem Zusammenhang sieht eine weitere Ausgestaltung des Rollwagens vor, dass sein Boden als Gitterboden ausgebildet ist. Der Boden bzw. Gitterboden ist vorzugsweise aus Kunststoff, besonders bevorzugt aus faserverstärktem Kunststoff hergestellt.

Nachfolgend wird die Erfindung anhand einer mehrere Ausführungsbeispiele darstellenden Zeichnung näher erläutert. Es zeigen:
- Fig. 1 - Fig. 4: einen erfindungsgemäßen Rollwagen jeweils im Gebrauchszustand, in einer perspektivischen Darstellung, in Vorderansicht (Längsseitenansicht), Seitenansicht und in Draufsicht;
- Fig. 5 - Fig. 8: den Rollwagen aus den Figuren 1 bis 4 jeweils im eingeklappten Leerzustand, in einer perspektivischen Darstellung, in Vorderansicht (Längsseitenansicht), Seitenansicht und in Draufsicht;
- Fig. 9 - Fig. 12: zwei eingeklappte, platzsparend ineinander gestellte Rollwagen entsprechend dem in den Figuren 1 bis 8 gezeigten Rollwagen, in einer perspektivischen Darstellung, in Vorderansicht (Längsseitenansicht), Seitenansicht und in Draufsicht; und
- Fig. 13 - Fig. 16: einen weiteres Ausführungsbespiel des erfindungsgemäßen Rollwagens im eingeklappten Leerzustand bzw. in einem Zwischenzustand, in einer perspektivischen Darstellung und in Vorderansicht (Längsseitenansicht).

Der in der Zeichnung dargestellte Rollwagen 1 ist für den Transport von Stückgütern bestimmt, beispielsweise von Paketen oder Briefbehältern. Er kann auch als Transportwagen oder Rollcontainer bezeichnet werden.

Der Rollwagen (Transportwagen) 1 ist mit vorzugsweise vier Rollen 2, 3 in Form von Laufrädern versehen. Der Wagen 1 könnte allerdings in Abweichung zu den hier gezeigten Ausführungsbeispielen auch nur drei Laufräder 2, 3 aufweisen.

Die Rollen 2, 3 sind an Trägern 4, 5 montiert, die vorzugsweise rahmenförmig ausgebildet und beispielsweise aus Metall gefertigt sind. Die Träger 4, 5 tragen Seitenwände 6, 7, die zum Beispiel als Gitterwände ausgeführt sind. Die Seitenwände 6, 7 bzw. Träger 4, 5 sind durch ein Längsseitenteil 8 miteinander verbunden. Der jeweilige Träger 4, 5 definiert einen Abschnitt einer Längsseite des Rollwagens 1 bzw. des Längsseitenteils 8. Das Längsseitenteil 8 ist als Längsholm ausgebildet. Der Längsholm 8 ist beispielsweise aus einem Metallrohr, vorzugsweise Stahlrohr gefertigt.

Des Weiteren weist der Rollwagen 1 einen hochklappbaren Boden (Grundboden) 9 auf. Die horizontale Achse, um die der Boden 9 hochgeklappt werden kann, verläuft parallel zu einer der beiden Seitenwände 6, 7. Der Boden 9 ist aus Gründen der Gewichtsverringerung als Gitterboden ausgeführt. An der Unterseite des Bodens 9 sind Verbindungselemente 10 vorgesehen, die mit dem Träger 4 formschlüssig oder in Form einer lösbaren Rastverbindung verbindbar sind.

Die Seitenwand 6 ist um eine vertikale Achse klappbar, wohingegen die andere Seitenwand 7 feststehend gegenüber dem Längsseitenteil 8 ist. Der Träger 4, auf welchem die klappbare Seitenwand 6 steht, ist über ein Gelenk 11 mit dem Längsseitenteil 8 verbunden. Das Gelenk 11 definiert die vertikale Achse, um welche die Seitenwand 6 klappbar ist. Nachdem der Boden 9 zu der feststehenden Seitenwand 7 hoch geklappt ist, kann der Träger 4 mit der Seitenwand 6 aus der Stellung, in welcher er parallel zu dem Träger 5 der feststehenden Seitenwand 7 ausgerichtet ist, an die Innenseite des Längsseitenteils 8 geschwenkt werden. An der feststehenden Seitenwand 7 ist mindestens eine Sicherungsvorrichtung vorgesehen, mittels welcher der Boden 9 in der hochgeklappten Stellung gegen unbeabsichtigtes Herunterklappen gesichert werden kann.

Die Drehachse des Gelenks 11 ist von der Außenseite der klappbaren Seitenwand 6 um ein horizontales Maß A beabstandet. Dieses Maß (Abstand A) liegt in einem Größenbereich, dessen Untergrenze dem Durchmesser der jeweiligen Rolle oder einem Drittel der Breite B der klappbaren Seitenwand 6 entspricht. Die Obergrenze des besagten Größenbereichs, also der maximale Abstand der Drehachse des Gelenks 11 von der Außenseite 6.1 der klappbaren Seitenwand 6, beträgt ca. 52% der Breite B der klappbaren Seitenwand 6 bzw. ca. 52% der Breite B des klappbaren Bodens 9. In den hier gezeigten Ausführungsbeispielen entspricht der Abstand A der Drehachse des Gelenks 11 von der Außenseite 6.1 der klappbaren Seitenwand 6 etwa der Hälfte der Breite B der klappbaren Seitenwand 6 bzw. der Hälfte der Breite B des klappbaren Bodens 9.

Die Rollen 2, die an der einklappbaren Seitenwand 6 angeordnet bzw. an dem Träger 4 montiert sind, sind als Lenkrollen ausgeführt. Die an der feststehenden Seitenwand 7 angeordneten und an dem Träger 5 montierten Rollen 3 sind hier als Bockrollen ausgeführt. Alternativ können die Bockrollen 3 durch Lenkrollen, die jeweils mit einem Richtungsfeststeller (nicht gezeigt) versehen sind, ersetzt werden, wobei die Richtungsfeststeller bei Bedarf entriegelt werden können.

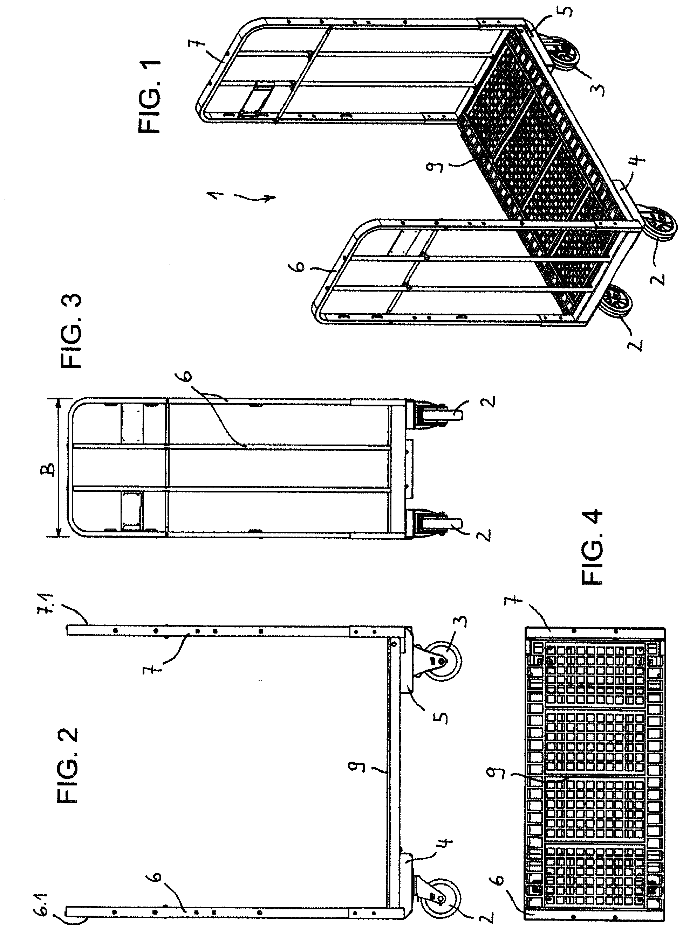

Insbesondere den Figuren 1, 2 und 4 ist zu entnehmen, dass die Rollen 2, 3 so angeordnet sind, dass sie beim Verfahren des Rollwagens 1 in einer Richtung, die parallel zu seiner Längsseite ist, gegenüber den Außenseiten 6.1, 7.1 der Seitenwände 6, 7 nicht vorstehen.

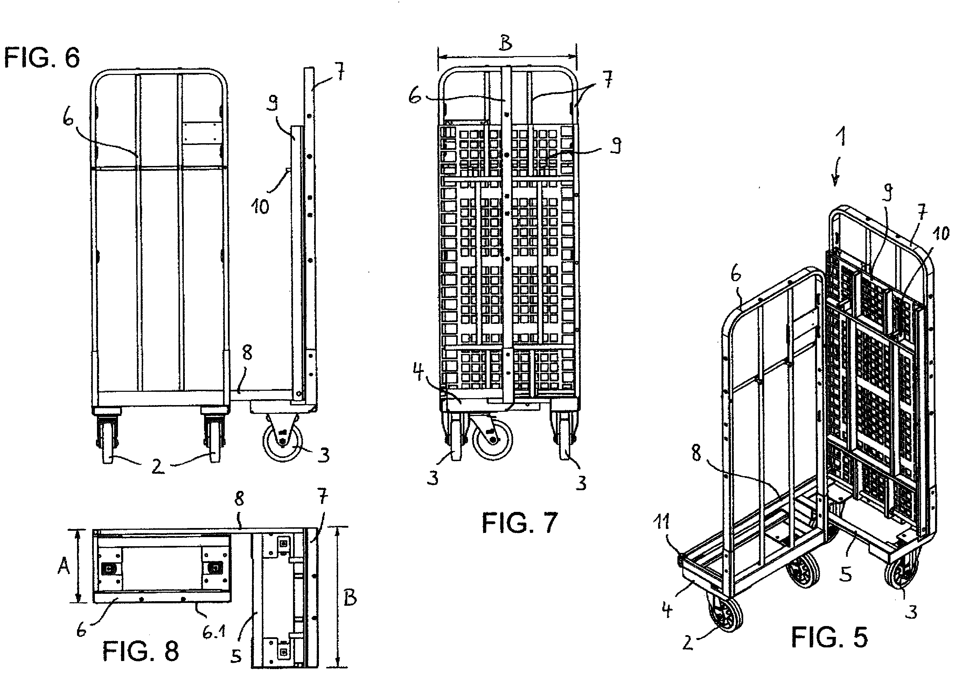

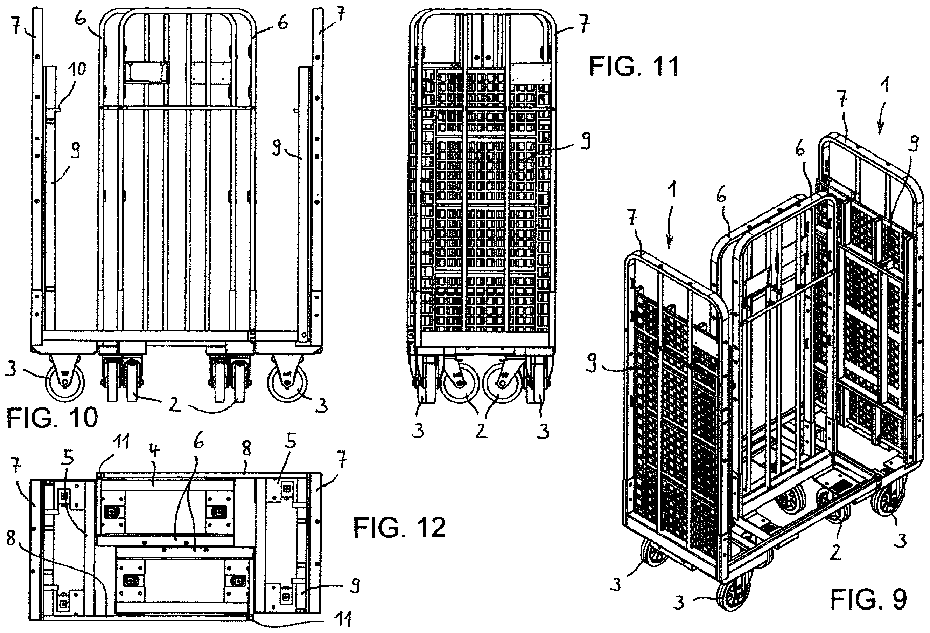

Ein Vergleich der Figuren 1 bis 4 mit den Figuren 5 bis 8 und der Vergleich der Figuren 5 bis 8 mit den Figuren 9 bis 12 macht deutlich, dass der erfindungsgemäße Rollwagen 1 im eingeklappten Zustand nicht nur eine reduzierte Grundfläche in L-Form einnimmt, sondern dann zudem in seiner Gesamtlänge reduziert ist. Somit ist es möglich, wie die Figuren 9 bis 12 zeigen, zwei geklappte Wagen 1 so ineinander zu stellen, dass sie nur etwa die Grundfläche eines Wagens 1 in dessen Gebrauchszustand gemäß den Figuren 1 bis 4 einnehmen und ineinander gestellt die Gesamtlänge des einzelnen Wagens 1 von z.B. ca. 1200 mm nicht überschreiten.

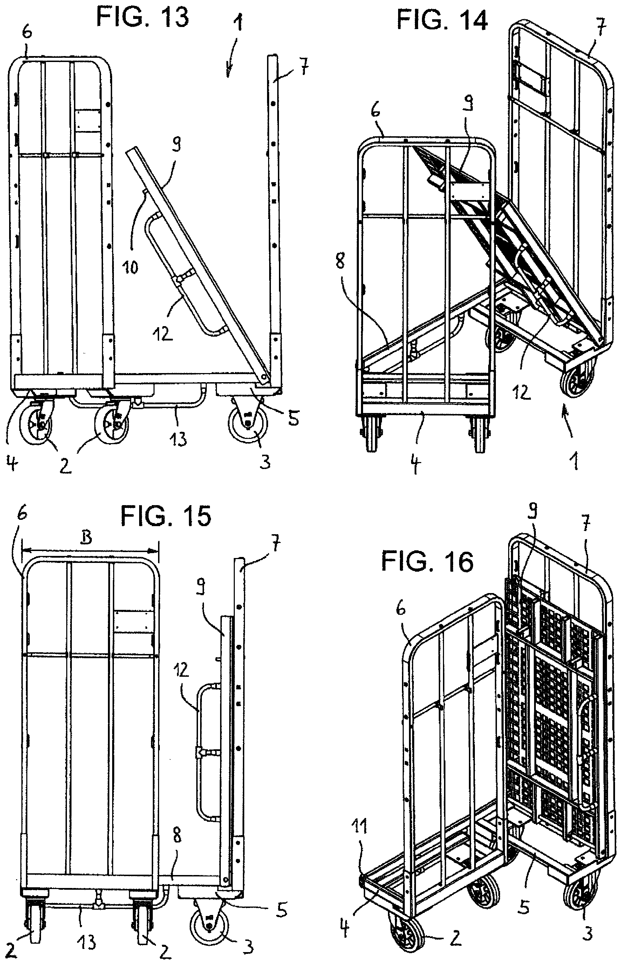

Das in den Figuren 13 bis 16 dargestellte Ausführungsbeispiel des Rollwagens unterscheidet sich von dem in den anderen Figuren gezeigten Ausführungsbeispiel unter anderem dadurch, dass der Boden 9 des Rollwagens 1 mit einem bügelförmigen Griff 12 versehen ist. Der Griff 12 steht gegenüber der Unterseite des Bodens 9 vor und verläuft entlang der dem Längsseitenteil 8 abgewandten Längskante des Bodens 9. Der Griff 12 kann auch als schlaufenförmiges Ansatzelement bezeichnet werden. Zudem ist bei dem Rollwagen 1 gemäß den Figuren 13 bis 16 das Längsseitenteil 8 mit einem schlaufen- oder bügelförmigen Ansatzelement 13 versehen, das gegenüber der Unterseite des Längsseitenteils 8 vorsteht. Die Abmessungen des schlaufen- oder bügelförmigen Ansatzelements 13 entsprechen im Wesentlichen denjenigen des bügelförmigen Griffs 12. In der horizontalen Stellung des Bodens 9 sind der Griff 12 und das Ansatzelement 13 parallel zu einander angeordnet und fluchten miteinander in der Vorderansicht (Längsseitenansicht) des Rollwagens 1. Das Ansatzelement 13 erhöht die Biegesteifigkeit des Längsholms 8. Insbesondere dienen die Doppelschlaufen oder schlaufenförmigen Ansatzelemente 12, 13 als Führung zur Aufnahme von Hubvorrichtungen wie z.B. Gabeln von Gabelstaplern.

Die Ausführung der Erfindung ist nicht auf die in der Zeichnung dargestellten Ausführungsbeispiele beschränkt. Vielmehr sind zahlreiche Varianten des erfindungsgemäßen Rollwagens 1 denkbar, die auch bei von den gezeigten Beispielen abweichender Gestaltung von der in den beigefügten Ansprüchen angegebenen Erfindung Gebrauch machen.

## Patentansprüche

1. Rollwagen (1) zum Transport von Stückgütern, insbesondere von Paketen oder Briefbehältern, mit wenigstens drei Rollen (2, 3), einer Längsseite, Seitenwänden (6, 7), einem die Seitenwände (6, 7) miteinander verbindenden Längsseitenteil (8) und mindestens einem hochklappbaren Boden (9), wobei eine (6) der Seitenwände um eine vertikale Achse klappbar ist, **dadurch gekennzeichnet, dass** die klappbare Seitenwand (6) auf einem Träger (4) steht, der mit mindestens einer der Rollen (2) versehen ist, einen Abschnitt der Längsseite des Rollwagens (1) definiert und über ein Gelenk (11) mit dem Längsseitenteil (8) verbunden ist, wobei die Drehachse des Gelenks (11) von der Außenseite (6.1) der klappbaren Seitenwand (6) um ein horizontales Maß (A) beabstandet ist, welches in einem Größenbereich liegt, dessen Untergrenze dem Durchmesser der mindestens einen an dem Träger (4) vorgesehenen Rolle (2) entspricht und dessen Obergrenze 52% der Breite (B) der klappbaren Seitenwand (6.1) entspricht, und wobei das Gelenk (11) die vertikale Achse definiert, um welche die Seitenwand (6) klappbar ist.

2. Rollwagen (1) nach Anspruch 1, **dadurch gekennzeichnet, dass** die Untergrenze des Größenbereichs einem Drittel der Breite (B) der klappbaren Seitenwand (6.1) entspricht.

3. Rollwagen (1) nach Anspruch 1 oder 2, **dadurch gekennzeichnet, dass** der Träger (4) rahmenförmig ausgebildet ist.

4. Rollwagen (1) nach einem der Ansprüche 1 bis 3, **dadurch gekennzeichnet, dass** die mindestens eine an dem Träger (4) vorgesehene Rolle (2) als Lenkrolle ausgeführt ist.

5. Rollwagen (1) nach einem der Ansprüche 1 bis 4, **dadurch gekennzeichnet, dass** an der Unterseite des Bodens (9) mindestens ein Verbindungselement (10) vorgesehen ist, dem ein am Träger (4) vorgesehenes Verbindungselement zugeordnet ist, wobei beide Verbindungselemente miteinander gekoppelt eine Formschluss- und/oder Rastverbindung definieren.

6. Rollwagen (1) nach einem der Ansprüche 1 bis 5, **dadurch gekennzeichnet, dass** die Rollen (2, 3) so angeordnet sind, dass sie beim Verfahren des Rollwagens (1) in einer Fahrrichtung, die parallel zu seiner Längsseite ist, gegenüber den Außenseiten (6.1, 7.1) der Seitenwände (6, 7) nicht vorstehen.

7. Rollwagen (1) nach einem der Ansprüche 1 bis 6, **dadurch gekennzeichnet, dass** das Längsseitenteil (8) als Längsholm ausgebildet ist.

8. Rollwagen (1) nach einem der Ansprüche 1 bis 7, **dadurch gekennzeichnet, dass** sein Boden (9) mit einem schlaufen- oder bügelförmigen Griff (12) versehen ist, der gegenüber der Unterseite des Bodens (9) vorsteht und entlang der dem Längsseitenteil (8) abgewandten Längskante des Bodens (9) verläuft.

9. Rollwagen nach einem der Ansprüche 1 bis 8, **dadurch gekennzeichnet, dass** das Längsseitenteil (8) mit einem schlaufen- oder bügelförmigen Ansatzelement (13) versehen ist, das gegenüber der Unterseite des Längsseitenteils (8) vorsteht.

10. Rollwagen nach einem der Ansprüche 1 bis 9, **dadurch gekennzeichnet, dass** der Boden (9) um eine horizontale Achse klappbar ist, die parallel zu einer der Seitenwände (6, 7) verläuft.

11. Rollwagen nach Anspruch 10, **dadurch gekennzeichnet, dass** die Seitenwand (7), an welcher der Boden (9) hochklappbar ist, als gegenüber dem Längsseitenteil (8) feststehende Seitenwand ausgebildet ist.

12. Rollwagen nach Anspruch 11, **dadurch gekennzeichnet, dass** die feststehende Seitenwand (7) auf einem rahmenförmigen Träger (5) steht, der mit mindestens zwei der Rollen (3) versehen ist.

13. Rollwagen nach Anspruch 11 oder 12, **dadurch gekennzeichnet, dass** die an der feststehenden Seitenwand (7) angeordneten Rollen als Lenkrollen mit Richtungsfeststeller ausgeführt sind.

14. Rollwagen nach einem der Ansprüche 1 bis 13, **dadurch gekennzeichnet, dass** seine Seitenwände (6, 7) als Gitterwände ausgebildet sind.

15. Rollwagen nach einem der Ansprüche 1 bis 14, **dadurch gekennzeichnet, dass** sein Boden (9) als Gitterboden ausgebildet ist.

## Claims

1. A roller cart (1) for transporting piece goods, especially parcels or letter containers, comprising at least three rollers (2, 3), a longitudinal side, side walls (6, 7), a longitudinal side element (8) which connects the side walls (6, 7) to each other and at least one bottom (9) that can be folded up, wherein one (6) of the side walls can be folded around a vertical axis, **characterized in that** the foldable side wall (5) stands on a carrier (4) which is provided with at least one of the rollers (2), defines a section of the longitudinal side of the roller cart (1) and is connected to the longitudinal side element (8) via a hinge (11), wherein the rotation axis of the hinge (11) is spaced from the outer side (6.1) of the foldable side wall (6) by a horizontal dimension (A) which is comprised in a size range, the lower limit of which corresponds to the diameter of the at least one roller (2) provided on the carrier (4) and the upper limit of which corresponds to 52% of the width (B) of the foldable side wall (6.1) and wherein the hinge (11) defines the vertical axis, around which the side wall (6) can be folded.

2. A roller cart (1) according to claim 1, **characterized in that** the lower limit of the size range corresponds to a third of the width (B) of the foldable side wall (6.1).

3. A roller cart (1) according to claim 1 or 2, **characterized in that** the carrier (4) is designed in form of a frame.

4. A roller cart (1) according to one of the claims 1 through 3, **characterized in that** the at least one roller (2) provided on the carrier (4) is designed as a castor.

5. A roller cart (1) according to one of the claims 1 through 4, **characterized in that** at least one connecting element (10) is provided on the underside of the bottom (9), to which connecting element a connecting element provided on the carrier (4) is allocated, wherein both connecting elements define a positive-locking and/or a snap-lock connection, if they are coupled to each other.

6. A roller cart (1) according to one of the claims 1 through 5, **characterized in that** the rollers (2, 3) are arranged, such that they do not protrude with respect to the outer sides (6.1, 7.1) of the side walls (6, 7), if the roller cart (1) is displaced in a travelling direction which is parallel to the longitudinal side thereof.

7. A roller cart (1) according to one of the claims 1 through 6, **characterized in that** the longitudinal side element (8) is designed as a longitudinal bar.

8. A roller cart (1) according to one of the claims 1 through 7, **characterized in that** the bottom (9) thereof is provided with a loop-shaped or bracket-shaped handle (12) which protrudes with respect to the underside of the bottom (9) and extends along the longitudinal edge of the bottom that is placed opposite the longitudinal side element (8).

9. A roller cart (1) according to one of the claims 1 through 8, **characterized in that** the longitudinal side element (8) is provided with a loop-shaped or bracket-shaped projection element (13) which protrudes with respect to the bottom side of the longitudinal side element (8).

10. A roller cart (1) according to one of the claims 1 through 9, **characterized in that** the bottom (9) can be folded around a horizontal axis which extends in parallel to one of the side walls (6, 7)

11. A roller cart (1) according to one of the claims 1 through 10, **characterized in that** the side wall (7) on which the bottom (9) can be folded up, is designed as a stationary side wall with respect to the longitudinal side element (8).

12. A roller cart (1) according to claim 11, **characterized in that** the stationary side wall (7) stands on a frame-shaped carrier (5) which is provided with at least two of the rollers (3).

13. A roller cart according to claim 11 or 12, **characterized in that** the rollers arranged at the stationary side wall (7) are designed as castors with directional locking.

14. A roller cart (1) according to one of the claims 1 through 13, **characterized in that** the side walls thereof (6, 7) are designed as lattice walls.

15. A roller cart (1) according to one of the claims 1 through 14, **characterized in that** the bottom thereof (9) is designed as lattice bottom.

## Revendications

1. Chariot roulant (1) destiné au transport de marchandises en vrac, notamment de paquets ou de conteneurs de courrier, comprenant au moins trois rouleaux (2, 3), un côté longitudinal, des parois latérales (6, 7), une partie latérale longitudinale (8), qui relie les parois latérales l'une à l'autre et au moins un fond (9) susceptible d'être relevé, une (6) des parois latérales étant pliable autour d'un axe vertical , **caractérisé en ce que** la paroi latérale pliable (6) se trouve debout sur un support (4), qui est muni d'au moins un des rouleaux (2), qui définit une section du côté longitudinal du chariot roulant (1) et qui est relié à la partie latérale longitudinale (8) via une articulation (11), l'axe de rotation de l'articulation (11) étant espacé d'une dimension horizontale (A) de la face extérieure (6.1) de la paroi latérale pliable (6), laquelle dimension horizontale étant comprise dans une gamme dimensionnelle, dont la limite inférieure correspond au diamètre de l'au moins un rouleau (2) prévu sur le support (4) et dont la limite supérieure correspond à 52% de la largeur de la paroi latérale pliable (6.1), et l'articulation (11) définissant l'axe vertical, autour duquel la paroi latérale (6) eat pliable.

2. Chariot roulant (1) selon la revendication 1, **caractérisé en ce que** la limite inférieure de la gamme dimensionnelle correspond à un tiers de la largeur (B) de la paroi latérale pliable (6.1).

3. Chariot roulant (1) selon la revendication 1 ou la revendication 2, **caractérisé en ce que** le support (4) est configuré en forme d'un cadre.

4. Chariot roulant (1) selon l'une des revendications 1 à 3, **caractérisé en ce que** l'au moins un rouleau (2) prévu sur le support (4) est configuré comme une roulette de guidage.

5. Chariot roulant (1) selon l'une des revendications 1 à 4, **caractérisé en ce qu'**au moins un élément de liaison (10) est prévu sur la face inférieure du fond (9), auquel élément de liaison (10) est attribué un élément de liaison prévu sur le support (4), les deux éléments de liaison définissant une liaison par combinaison de formes et/ou par encliquetage, si les deux éléments de liaison sont couplés l'un à l'autre.

6. Chariot roulant (1) selon l'une des revendications 1 à 5, **caractérisé en ce que** les rouleaux (2, 3) sont disposés de sorte qu'ils ne font pas saillie par rapport aux faces extérieures (6.1, 7.1) des parois latérales (6, 7), si le chariot roulant (1) est déplacé dans un sens du déplacement, qui est parallèle à son côté longitudinal.

7. Chariot roulant (1) selon l'une des revendications 1 à 6, **caractérisé en ce que** la partie latérale longitudinale (8) est configurée comme un longeron longitudinal.

8. Chariot roulant (1) selon l'une des revendications 1 à 7, **caractérisé en ce que** son fond (9) est muni d'une poignée (12) en forme de boucle ou d'étrier, laquelle poignée fait saillie par rapport à la face inférieure du fond (9) et s'étend le long du bord longitudinal du fond (9), lequel est opposé à la partie latérale longitudinale (8).

9. Chariot roulant (1) selon l'une des revendications 1 à 8, **caractérisé en ce que** la partie latérale longitudinale (8) est munie d'un élément d'épaulement (13) en forme de boucle ou d'étrier, qui fait saillie par rapport à la face inférieure de la partie latérale longitudinale (8).

10. Chariot roulant (1) selon l'une des revendications 1 à 9, **caractérisé en ce que** le fond (9) est pliable autour d'un axe horizontal, qui s'étend parallèlement à l'une des parois latérales (6, 7).

11. Chariot roulant selon la revendication 10, **caractérisé en ce que** la paroi latérale (7), contre laquelle le fond (9) peut être relevé, est configurée comme une paroi latérale stationnaire par rapport à la partie latérale longitudinale (8).

12. Chariot roulant selon la revendication 11, **caractérisé en ce que** la paroi latérale stationnaire (7) se trouve debout sur une support (5) en forme de cadre, qui est muni d'au moins deux rouleaux (3).

13. Chariot roulant selon la revendication 11 ou la revendication 12, **caractérisé en ce que** les rouleaux disposés sur la paroi latérale stationnaire (7) sont configurés comme des roulettes de guidage avec blocage directionnel.

14. Chariot roulant selon l'une des revendications 1 à 13, **caractérisé en ce que** ses parois latérales (6, 7) sont configurées comme des parois formant treillis.

15. Chariot roulant selon l'une des revendications 1 à 14, **caractérisé en ce que** son fond (9) est configuré comme un fond formant treillis.
